# EUROPEAN PATENT SPECIFICATION

(11) **EP 4 387 392 B1**
(45) Date of publication and mention of the grant of the patent: **03.09.2025**
(21) Application number: 22213623.6
(22) Date of filing: 14.12.2022
(51) Int. Cl.: H05B 6/06

(54) **METHOD OF CONTROLLING A SWITCHING CONVERTER AND RELATED SWITCHING CONVERTER**
VERFAHREN ZUR STEUERUNG EINES SCHALTWANDLERS UND ZUGEHÖRIGER SCHALTWANDLER
PROCÉDÉ DE COMMANDE D'UN CONVERTISSEUR À DÉCOUPAGE ET CONVERTISSEUR À DÉCOUPAGE ASSOCIÉ

(43) Date of publication of application: 19.06.2024
(73) Proprietor: Whirlpool Corporation, Benton Harbor, MI 49022 (US)
(72) Inventor: Baldo, Salvatore, 21024 Cassinetta di Biandronno (VA) (IT); Barbati, Mario, 21024 Cassinetta di Biandronno (VA) (IT); Gallivanoni, Andrea, 21024 Cassinetta di Biandronno (VA) (IT); Sperone, Silvio, 21024 Cassinetta di Biandronno (VA) (IT)
(74) Representative: PGA S.p.A., Milano, Succursale di Lugano

(56) References cited:
- EP-A1- 3 890 439
- JP-B2- 5 084 875
- US-B1- 6 528 770
- US-B2- 11 229 092
- US-B2- 7 368 691
- GUILLEN PABLO ET AL: "Multi-Output Resonant Power Converters for Domestic Induction Heating", IECON 2020 THE 46TH ANNUAL CONFERENCE OF THE IEEE INDUSTRIAL ELECTRONICS SOCIETY, IEEE, 18 October 2020 (2020-10-18), pages 4320 - 4327, XP033860405, DOI: 10.1109/IECON43393.2020.9254987

## Description

### TECHNICAL FIELD

The present disclosure relates to power converters and more specifically to methods of controlling a switching converter usable for making induction cooktops, for induction heating items of cookware placed above a heating coil, and related switching converters.

### BACKGROUND

Cooking appliances, in particular induction cooking appliances, have at least one main switching converter to supply induction heating elements with a regulated supply power generated from a main energy supply, and an energy storage unit, in particular a bus capacitor, provided for smoothing bus voltage variations by charging/discharging a capacitor. Switching converters may be used as AC current generators (inverters) for induction cooktops, for powering heating coils magnetically coupled with pots/pans.

Usually the inverter topologies are resonant half bridge or single ended quasi resonant. Quasi-resonant converters are the cheapest and widely used especially in single coil cooktops. However, these converters are very complex to control and, due to the high working voltages, they are subject to high rate of device failure/damage. Moreover, the controllability range of the power on the pan is very narrow, forcing the inverter to work in ON / OFF mode in case low power levels are requested by the user. Half bridge converters are the most diffused, especially in multi-coil cooktops. Compared to quasi-resonant, they are more robust and easier to control. Although the controllability range of the output power is larger than a quasi resonant, these inverters are also forced to work in ON / OFF mode for low power values. Furthermore, when a low quality pan is used, the current circulating in the inverter is high, greatly lowering the efficiency.

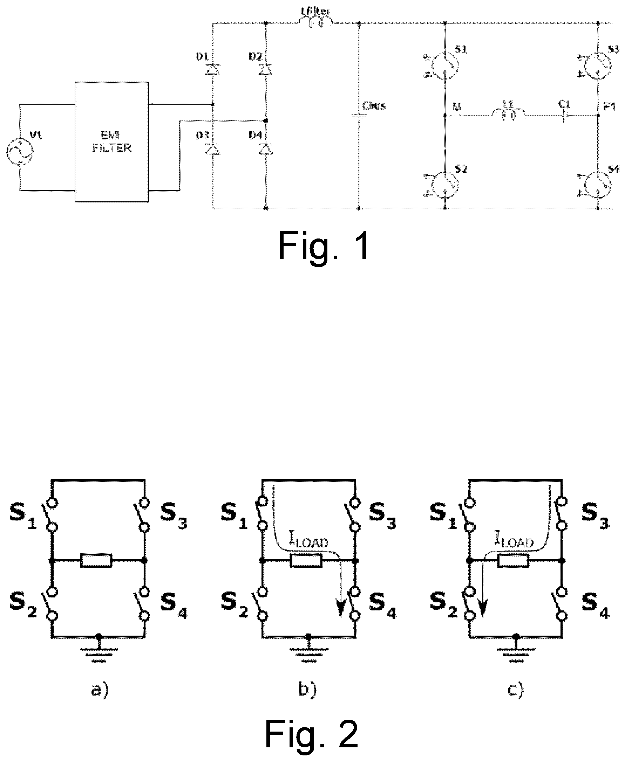

One possibility to improve the efficiency, by decreasing the circulating current, is to use full bridge inverters, as the one shown in figure 1, where the number of switching devices doubles but each switching device may be smaller and less expensive. Figures 2a, 2b and 2c show the full bridge converter of figure 1 in different working configurations. The full bridge converter consists of two half-bridge legs S1-S2, S3-S4, each of which comprises two switching devices. A load is connected between the two intermediate nodes of each leg, as shown in Figure 2a). In normal operation, the switching devices in a full bridge topology are switched ON and OFF in a specific pattern. Referring to Figure 2a), S1 and S2 will never be activated at the same time, and similarly S3 and S4 will never be activated at the same time, otherwise a short-circuit would be created. On the other hand, switching devices that are located diagonally in different legs are activated at the same time to have current flowing through the load.

Referring to Figure 2b), S1 and S4 will be turned on at the same time to have current flow through the load; after a predetermined amount of time, S1 and S4 are turned off, and S2 and S3 are turned on, as shown in Figure 2c). This way, the current through the load will flow in the opposite direction as before, thus creating an alternating current through the load at a frequency corresponding to the switching frequency of the devices.

In induction cooktops, typically the load is a series resonant circuit composed of a resonant capacitor and an inductor, and the inductor represents the induction coil and the pot placed on the cooktop surface above it.

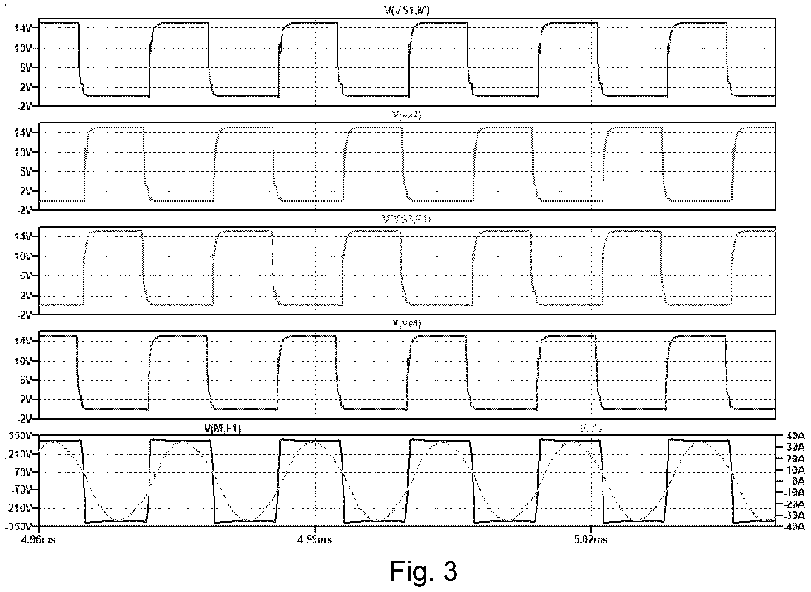

A typical driving of a full bridge inverter is shown in figure 3. For this example, a full-bridge converter has been simulated at 230 VAC, with a load composed of an inductance of 80 µH and a resistance of 10 Ω, with a resonant capacitor of 66 nF. The depicted signals in figure 3 represent the gate signals of the switches S1, S2, S3 and S4. When the signals are at the high level (about 15 V) it means that the devices are in ON state, while when the signals are at zero voltage it means that the devices are in OFF state.

The square-wave signal at the bottom of the plots in Figure 3 represents the voltage between the switching nodes of the inverter (voltage across nodes M and F1 as shown in Figure 1) while the sinusoidal signal is the current through the load.

A method of driving the switches of the full-bridge inverter of figure 2 and allowing to control the power delivered to the load is called phase shift (PS) control mode, and consists in introducing a switch-on delay between the switches placed diagonally in the full-bridge topology, i.e. the pairs S1-S4 and S2-S3, whilst switching in phase-opposition the switches belonging to a same half-bridge, i.e. the pairs S1-S2 and S3-S4.

In the case shown in Figure 3, the driving is at zero phase displacement, because the time-interval of overlap between the ON states of devices S1 and S4 (or S2 and S3) is 100%, obtaining the maximum power transfer on the load. For this particular case, the current peak is about 35 A.

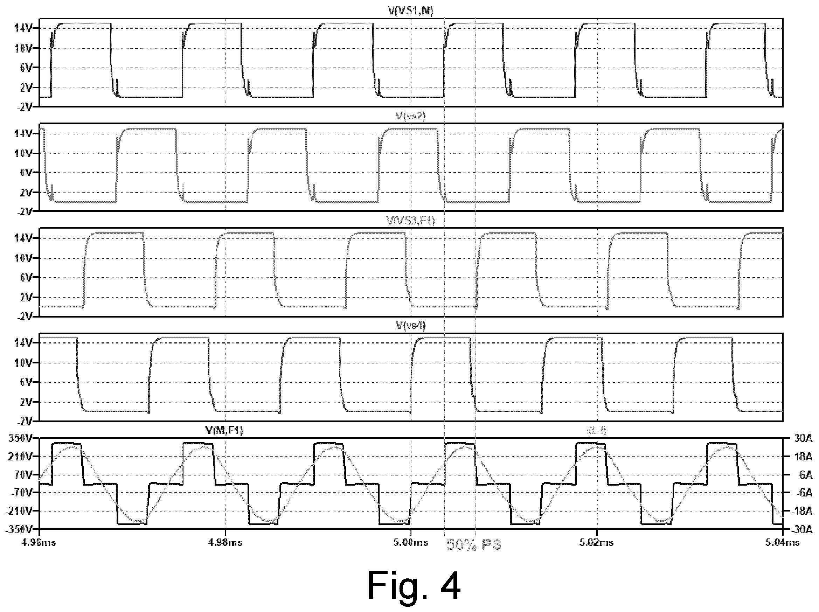

Figure 4 shows the driving of the same system, at the same frequency, with a phase displacement PS of 50%, because the period of overlap between the ON states of devices S1 and S4 (or S2 and S3) is 50%. In this case, the current on the load decreases (peak about 23 A), effectively obtaining a power variation on the load. In this example, device S1 is lagging S4 (or S2 is lagging S3), i.e. is activated at a later time during a switching period, but the phase displacement is also obtained in reverse, with device S1 leading S4 (or S2 leading S3).

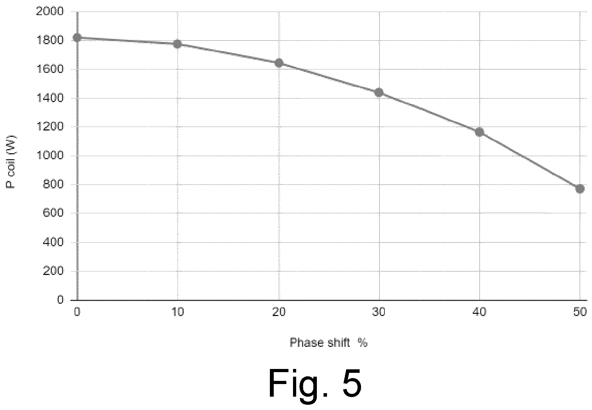

Using the same values of parameters for the time graph of figure 4, figure 5 shows a graph of the power transferred to the load vs the percentage of phase displacement variation, i.e. the percentage of overlap between the control signals of the devices diagonally, for a fixed switching frequency of the devices (81kHz in the case of figure 4). Based on the circuits, type of switches, using of snubber across the switches etc, the complete variation of phase displacement from 0 to 100%, keeping the frequency fixed, could lead to not working in soft switching mode, i.e. hard switching conditions working mode, a condition in which the switching of the devices occurs in the presence of voltage and current other than zero, leading to high power dissipations. In particular, hard switching can occur if we want to deliver low power where, referring to the previous example, it may be necessary to have phase displacement of more than 50%.

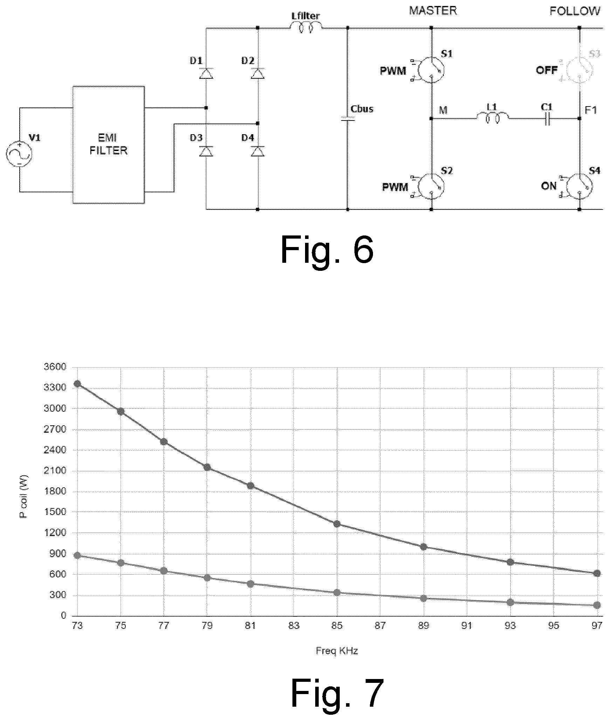

The full-bridge topology of figure 1 may also be used to operate as a half-bridge converter. As shown in figure 6, that depicts a full-bridge inverter driving an inductive load with a resonance capacitor, a first half-bridge MASTER is switched according to a PWM modulation, the low side switch S4 of the second half-bridge S3-S4 FOLLOW is always kept on and the high-side switch S3 of the second half-bridge S3-S4 is always kept off. In this way, a series resonant half bridge inverter is obtained. Because the coil is designed to work with the voltage supplied by a full bridge, the advantage of using this technique is that the working voltage of the half bridge is halved and therefore it is possible to obtain low power values continuously, without resorting to ON/OFF operation.

Figure 7 shows the power-to-frequency relationship of the inverter of Figure 6 in the two cases:
- case in which the master half bridge and one of the secondary ones are operated in PWM, so as to obtain the full bridge structure (upper curve);
- case in which the master half bridge and the low side of one of the secondary ones are switched on, so as to obtain a half bridge structure (lower curve).

In both cases, the switching frequency is the only control variable used to adjust the output power. Thanks to this mode of operation, it is possible to extend the power regulation range. In fact, referring to the figure 7, with using the full-bridge configuration it is possible to supply an output power ranging from about 3400W down to about 900W, whilst with the half-bridge functioning condition illustrated in Figure 6 it is possible to regulate the output power from 900W up to about 150W. Even in this case, it is not possible to work in soft switching conditions when smaller output power than 150W are to be delivered to the load.

Therefore, it is still unsolved the problem of reducing the output power provided to the load below a nominal minimum value without resorting to a discontinuous operation mode or a hard switching of the switches of the full-bridge. This problem is worsened when more than one induction heating coil is to be powered, because all heating coils must be powered at the same switching frequency for preventing generation of annoying audible noise.

It is thus desirable a method of driving a full-bridge inverter, to generate a very small output power without forcing hard-switching of the switches of the full-bridge converter. Document US 11 229 092 B2 discloses a method of controlling an induction hob according to the prior art.

### SUMMARY

Tests carried out by the Applicant have shown that it is possible to regulate the output power provided to a resonant load supplied by a full-bridge inverter by adjusting the switching frequency and/or the phase displacement of the switches, whilst keeping all the switches in soft switching condition.

More in detail, according to the method of controlling a switching converter of this disclosure, the regulation of the output power to be delivered to the at least one resonant load is obtained by adjusting the common switching frequency of said PWM control signals and the phase displacement of said PWM control signals, wherein said step of adjusting the phase displacement is carried out by adjusting a time delay between the turning-on of diagonal switches of said two half-bridge switching stages connecting said resonant load, within the same switching period. The phase displacement is carried out until hard-switching working conditions for said half-bridge switching stages are met, and wherein when said hard switching working conditions are met the method further comprises the step of adjusting the common switching frequency of all said PWM control signals to prevent the hard-switching working conditions.

The control method of this disclosure is particularly suitable for being used in multi-stage switching converters according to this disclosure, comprising more than three half-bridge switching stages.

An induction hob comprising a switching converter of this disclosure and a method of controlling an induction hob comprising a switching converter are also disclosed.

The invention is more precisely defined in the annexed claims.

### BRIEF DESCRIPTION OF THE DRAWINGS

Figure 1 shows a typical architecture of a full bridge inverter, suitable to be used in an induction heating cooktop.
Figures 2a, 2b and 2c show the full bridge stage of figure 1 in different working configurations.
Figure 3 shows a typical time graph of the main signals of the full bridge inverter of figure 1, driven without phase-shift.
Figure 4 shows a typical time graph of the main signals of the full bridge inverter of figure 1, with a phase displacement PS of 50%.
Figure 5 shows a graph of the power transferred to the load vs. the percentage PS of phase displacement variation for a fixed switching frequency of the switches.
Figure 6 depicts a full-bridge inverter of figure 1 driving a resonant load, wherein the second half-bridge FOLLOW is configured to allow the full-bridge inverter to operate as a series resonant half bridge inverter.
Figure 7 shows a graph of the power transferred to the load vs. switching frequency, respectively when the half-bridges are switched for obtaining a full bridge functioning mode (upper curve) and when only one of the half bridge stages is switched for obtaining a half bridge working mode (lower curve).
Figure 8 is a graph for comparing a possible power-to-frequency relationship for the inverter of figure 1, with and without phase displacement modulation.
Figure 9 shows a multi-stage full bridge inverter comprising a single master half-bridge switching stage and a plurality of slave half-bridge switching stage, each configured to supply a respective resonant load.
Figure 10 shows how to supply two loads electrically in series using the multi-stage full bridge inverter of figure 9.
Figure 11 shows how to supply two or more loads electrically in parallel using the multi-stage full bridge inverter of figure 9.
Figure 12 shows a multi-stage full bridge inverter comprising a plurality of master half-bridge switching stages and, for each master half-bridge switching stage, a respective second plurality of slave half-bridge switching stages.
Figure 13 shows a multi-stage full bridge inverter comprising a plurality of master half-bridge switching stages for supplying numerous L-C resonant pair, wherein each L-C resonant pair is connected according to a matrix arrangement between a master half-bridge switching stage and a slave half-bridge switching stage of the second plurality.

### DETAILED DESCRIPTION OF EXEMPLARY EMBODIMENTS

The method of this disclosure will be illustrated making reference to the enclosed figures from 8 to 13. It may be used to control a switching converter as the one shown in figure 1, which can be incorporated into an induction hob, comprising:
- a rectifier stage, such as for example the diode bridge D1 to D4 shown in figure 1 preceded by an electromagnetic interference filter EMI FILTER having input AC terminals, for receiving an AC voltage to be rectified, and a DC-bus having a high-side line for making available a DC voltage between said high-side line and said low-side line, wherein the DC voltage is generated as a rectified replica of the AC voltage received at the input AC terminals;
- a plurality of half-bridge switching stages, connected electrically in parallel between the high-side line and the low-side line, each half-bridge switching stage of the plurality of half-bridge switching stages comprising a respective high-side controlled switch S1, S3, and low-side controlled switch S2, S4, connected between them and sharing an intermediate current terminal of the half-bridge switching stage, wherein the plurality of half-bridge switching stages comprises at least a master half-bridge switching stage and a slave half-bridge switching stage;
- at least one L-C resonant pair connected between two intermediate current terminals of two half-bridge switching stages of the half-bridge switching stages, wherein the L-C resonant pair being configured to be magnetically coupled with a respective load thereby defining at least one equivalent resonant load R-L-C;
- a control unit configured to turn on and off the controlled switches of the half-bridge switching stages during switching periods by means of respective periodic PWM control signals.

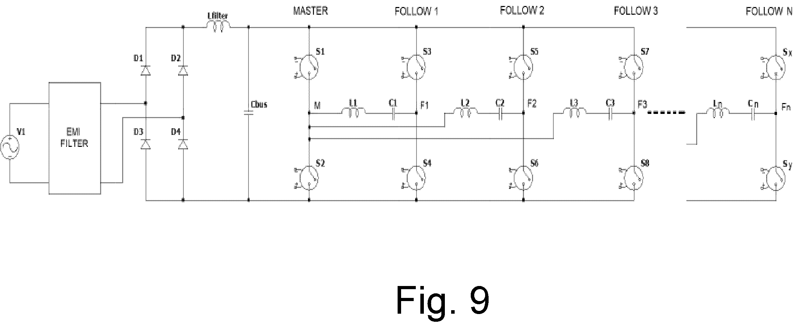

The method that will be described hereinafter may be implemented in a multi-stage inverter, in which there is a master half bridge switching stage and many slave half bridge switching stages that will be activated depending on the coil to be energized, as shown in figures 9 to 13. The master half bridge switching stage is then operatively combined with each of the slave half-bridge switching stages to constitute a full bridge inverter.

It has been found that it is possible to drive the switches of a full-bridge inverter in soft switching condition down to an almost null output power delivered to the supplied L-C resonant pair(s), by adjusting at the same time a common switching frequency of all the PWM control signals and the phase displacement of the PWM control signals. The phase displacement is adjusted by adjusting a time delay between turning-on instants of high-side/low-side switches of the master half-bridge switching stage and low-side/high-side switches, respectively, of the slave half-bridge switching stage configured to supply said first resonant load, within the switching periods.

According to an aspect, the step of adjusting the phase displacement is carried out until hard-switching working conditions for the half-bridge switching stages are met and, when the hard-switching working conditions are met, the step of adjusting the common switching frequency of all the PWM control signals is carried out to prevent the hard-switching working conditions.

According to an aspect, the step of adjusting the phase displacement includes a preliminary step of mapping levels of the output power as a function of the phase displacement about the first nominal reference power value, thereby defining an operating phase range. For example, the adjustment step may include changing the phase displacement within the operating phase range with a variation step in the range between 0.1° and 5°, preferably about 2°.

Therefore, using the method of the present disclosure it is possible to modulate the output power delivered to the supplied R-L-C load(s) down to very low power values without having to resort to the ON/OFF mode, thus preventing generation of the annoying clicking noise inherent in this mode of operation.

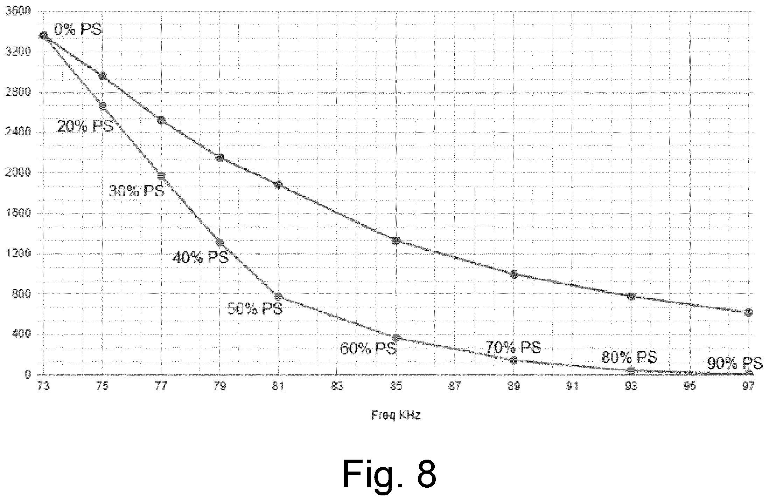

As shown in Figure 8, by adjusting in a combined manner phase-shift PS and switching frequency, it is possible to regulate the output power in a wide regulation range with a high conversion efficiency. In this way, large power variations may be obtained in a limited frequency range adjustment or it is possible to obtain very low power values without driving the inverter into a discontinuous functioning (ON/OFF) mode.

According to one aspect, paired values of adjustments of switching frequency and phase displacement PS of the control signals of the switches of the switching stages, may be preliminarily stored in a look-up table and the adjustments of the switching frequency and phase displacement are determined using as entries the requested output power to be delivered to the supplied R-L-C load(s) and electrical parameters of the R-L-C load(s), to drive all the involved switching stages of the inverter in a soft switching working condition. As an alternative, these paired values may be calculated with a control algorithm, for adjusting at the same time the switching frequency and the phase displacement so that a desired adjustment of power delivery is obtained, in function of the requested output power to be delivered to the supplied R-L-C load(s) and of the electrical parameters of the R-L-C resonant load(s). According to one aspect, when the first nominal reference value is lower than a first predetermined power level, the method comprises energizing the supplied resonant load only by operating the master half-bridge switching stage whilst, in the slave half-bridge switching stage, the high-side controlled switch is maintained off and the low-side controlled switch is maintained on during the switching periods. The above-illustrated method steps may be implemented also in a switching converter comprising a second slave half-bridge switching stage with a second L-C resonant pair, configured to be magnetically coupled with a second respective load thereby defining a second resonant load R-L-C-2, connected between the intermediate current terminal of the master half-bridge switching stage and the intermediate current terminal of the second slave half-bridge switching stage. Conveniently, the control unit is configured to regulate a requested output power to be delivered the first resonant load to the first nominal reference value and to regulate a requested output power to be delivered the second resonant load to a second nominal reference value.

According to one aspect, it is possible to operate the master half-bridge switching stage to simultaneously energize the first resonant load R-L-C-1 and the second resonant load R-L-C-2.

According to one aspect, when the first nominal reference value and the second nominal value are set equal to each other and are lower than a second predetermined power level, the resonant loads R-L-C-1 and R-L-C-2 are energized only by operating the master half-bridge switching stage, while keeping off the high-side controlled switches of the first and second slave half-bridge switching stages and while keeping on during the switching periods the low-side controlled switches of the first and second slave half-bridge switching stages.

According to one aspect, the first predetermined power level and optionally also the second predetermined power level are lower than 900W, preferably lower than 600W, more preferably lower than 400W. According to an option, the first predetermined power level is preferably equal to the second predetermined power level.

The present method may be implemented for controlling a multi-stage inverter of figure 9, which comprises a half bridge stage called MASTER, which has the role of master, and a plurality of slave half bridge stages called FOLLOW, each connected to a respective L-C resonant pair to be supplied. For example, if there are four coils and the second coil is to be powered, then the master half-bridge MASTER and the respective slave half bridge FOLLOW connected to the second coil may be activated, so as to obtain a full bridge structure for powering that L-C pair.

For example, if also the first coil is to be powered, there will be an algorithm that will cyclically switch on the inverter of figure 9 according to a sequence which could be: MASTER-FOLLOW1, MASTER-FOLLOW2, MASTER-FOLLOW1 and so on. Another possibility is to switch on more than one slave half-bridge at the same time, but in this case the master half-bridge MASTER must be able to supply the required power. Of course, the maximum number of half-bridge stages that can be turned on simultaneously is also limited by the maximum power from the mains line.

The architecture of figure 9 may be conveniently used to produce an induction cooktop allowing numerous ways to modulate the power delivered to a pot placed on the cooktop. Every time the master half-bridge MASTER and one of the slave half-bridge FOLLOW are turned on, a series resonant full bridge inverter is obtained. In this case, the classic way to modulate the power on the pot is to vary the driving frequency of the full bridge. However, in cases where several coils are turned on at the same time, the constraint of keeping the same switching frequency, necessary to avoid generating annoying hearable beating noises, can limit power management possibilities. To solve this problem, the full bridge structure gives us the possibility to use the method according to the present disclosure for adjusting phase displacement in combination with adjustment of the switching frequency, with which it is possible to modulate the power down to an almost null value.

According to one aspect, the supplied resonant pair(s) is(are) configured to be controllably connectable between the two intermediate current terminals of two half-bridge switching stages.

According to one aspect, the switching devices could be IGBT, MOSFET, SIC, GAN and others.

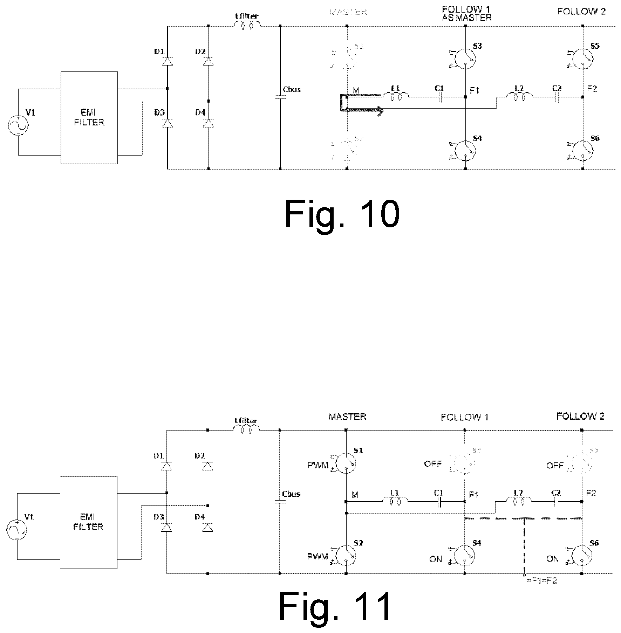

The method of this disclosure combines phase displacement adjustment and switching frequency adjustment so as to always find the right compromise in terms of power delivery, dissipated power and acoustic noise, especially in cases where more than one coil must be switched on. There are cases in which it may be useful to connect two coils together, as shown in figure 10, for example when power is to be supplied to a very large pot that covers two coils. With the system in figure 9 it is possible to connect two coils in series using one of the secondary half bridges as master, as shown by way of example in figure 10. For example, if coil 1 and coil 2 must be connected in series, the first slave half bridge FOLLOW1 may be used as the master half-bridge and the second slave half bridge FOLLOW2 may be used as slave. Obviously, the opposite operation is also possible, i.e. using FOLLOW2 as master half-bridge and FOLLOW1 as slave half-bridge.

When operating the converter in a half-bridge configuration, as described earlier and shown in Figure 6, it is also possible to connect two or more coils in parallel, as shown in figure 11, using the master half bridge MASTER and the low side switches S4, S6, of the other slave half-bridges to select which coils are to be connected electrically in parallel. For example, if we want to connect coil 1 and coil 2 in parallel as shown in figure 11, it is sufficient to keep on the low side switches S4, S6 of the first and second slave half bridge (S4 and S6 in this example) FOLLOW1 and FOLLOW2 and operate the master half bridge MASTER at the driving frequency.

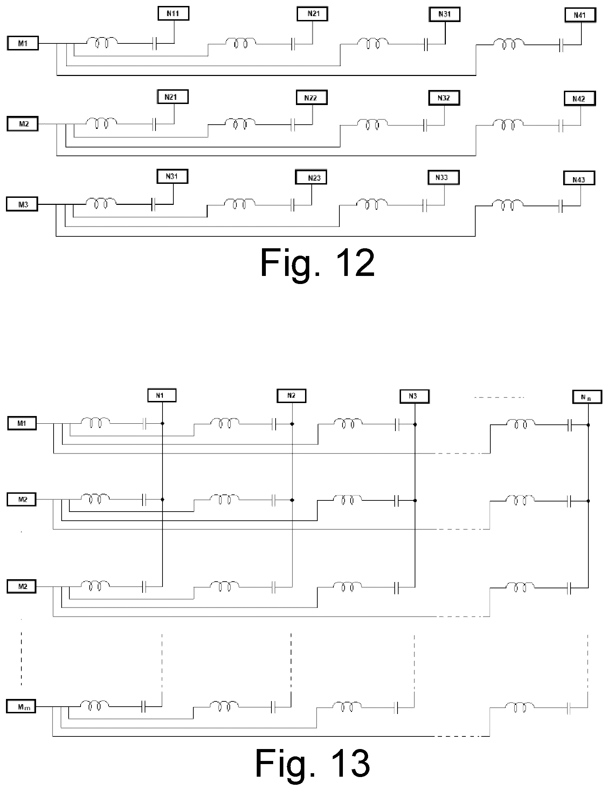

The architecture of Figure 9 can be expanded by obtaining a multi-stage inverter as in Figure 12, where the blocks M and N represent respectively master half bridge switching stages (M1, M2, M3) and slave half bridge switching stages (N11,..., N43). For example, it could be possible to have a system with three masters, each of which with four coils and therefore four slave half-bridges, all connected to the same DC BUS. In this case, a system with 12 coils is obtained. The number of converters and coils depends on:
- the final dimensions of the product;
- the maximum power limitations of the individual inverters;
- the power limitations of the electrical network.

The method of this disclosure may be also used to control this multi-stage inverter for providing an almost null output power to the supplied L-C load whilst keeping all switches in soft switching mode. The architecture of Figure 12 can be modified as shown in Figure 13 to supply a plurality of L-C load(s) organized in a matrix structure, where the blocks M and N are half-bridge stages, as in figure 12. For example, if there is a unique DC bus as in the inverter of figure 9, it could be possible to have a matrix architecture connected to the DC bus, with *m* master half-bridges M1, ..., Mm, each of which having an intermediate node, between the respective high-side switch and the low-side switch, connected to *n* loads and therefore *n* slave half-bridges N1, ..., Nn. In this case, an architecture capable of powering MxN loads is obtained.

According to the method of this disclosure, it is possible to control the output power delivered to each supplied load by adjusting at the same time the phase-shift PS of each master-slave (M-N) pair and their switching frequency. Conveniently, the switching frequency will be adjusted for all activated switches at the same time, to prevent audible noise.

In cases where more than one DC BUS is present, it is also possible to connect groups of the matrix described to each DC BUS. As in the previous case, the number of converters and coils depends on:
- the final dimensions of the product;
- the maximum power limitations of each single half-bridge;
- the power limitations of the electrical network.

All the operating modes described can be used in combination to optimize power management.

## Claims

1. A method of controlling an induction hob provided with a switching converter, said switching converter comprising:
- a rectifier stage having input AC terminals, for receiving an AC voltage to be rectified, and a DC-bus having a high-side line and a low side line for making available a DC voltage on said DC-bus between said high-side line and said low-side line,
- a plurality of half-bridge switching stages, connected electrically in parallel between said high-side line and said low-side line, each half-bridge switching stage of said plurality of half-bridge switching stages comprising a respective high-side controlled switch and low-side controlled switch connected between them and sharing an intermediate current terminal of the half-bridge switching stage,
- at least a first L-C resonant pair connected between two intermediate current terminals of two half-bridge switching stages of said plurality of half-bridge switching stages, wherein said first L-C resonant pair being configured to be magnetically coupled with a respective load, thereby defining at least a first equivalent resonant load (R-L-C),
wherein
- one of said plurality of half-bridge switching stages, is operated as a master half-bridge switching stage, and
- a second half-bridge switching stage of said plurality of half-bridge switching stages is operated as a first slave half-bridge switching stage
and wherein a first L-C resonant pair of said the at least one L-C resonant pair is connectable between the intermediate current terminal of the master half-bridge switching stage and the intermediate current terminal of the first slave half-bridge switching stage,
and wherein the first L-C resonant pair of said the at least one L-C resonant pair being magnetically coupled with a first respective load, thereby defining a first resonant load (RLC1) of the at least one resonant load (RLC),
- a control unit configured to turn on and off the controlled switches of said half-bridge switching stages during switching periods by means of respective periodic PWM control signals;
said method comprising the following steps:
with said control unit, regulating a requested output power to be delivered to said at least a first resonant load with a first nominal reference value, wherein regulating the requested output power comprises the step of
- adjusting a common switching frequency of all said PWM control signals and a phase displacement of at least one of said PWM control signals, wherein said step of adjusting the phase displacement is carried out by adjusting a time delay between turning-on instants of high-side/low-side switches of said master half-bridge switching stage and low-side/high-side switches of said slave half-bridge switching stage configured to supply said first resonant load, within the switching periods;
said step of adjusting the phase displacement is carried out, preferably in the range between 0° and 180°, until hard-switching working conditions for said half-bridge switching stages are met, and wherein, when said hard-switching working conditions are met, the method further comprising the step of adjusting the common switching frequency of all said PWM control signals, to thereby prevent said hard-switching working conditions.

2. The method of the preceding claim, wherein the step of adjusting the phase displacement includes a preliminary step of mapping levels of the output power as a function of the phase displacement and of the common switching frequency about the first nominal reference power value, thereby defining an operating phase range, and wherein said adjustment step includes changing the phase displacement within said operating phase range with a variation step in the range between 0.1° and 5°, preferably about 2°.

3. The method of claim 2, wherein said operating phase range is determined based upon the resonant load and is stored in a memory unit, preferably as a lookup table, and wherein said operating phase range is determined using as entries for the lookup table the requested output power to be delivered to the equivalent resonant load (R-L-C) and the electrical parameters of the equivalent resonant load (R-L-C).

4. The method of one of the preceding claims, wherein adjusting the common switching frequency of all said PWM control signals results in modifying the common switching frequency of all said PWM control signals of about 200 to 300 Hz.

5. The method according to any one of the previous claims, wherein when the first nominal reference value is lower than a first predetermined power level, the method comprises energizing the first resonant load (RLC1) only by operating said master half-bridge switching stage, and wherein the high-side controlled switch of said first slave half-bridge switching stage is maintained off during said switching periods, and wherein the low-side controlled switch of said first slave half-bridge switching stage is maintained on during said switching periods.

6. The method according to any one of the preceding claims, wherein a third half-bridge switching stage of said plurality of half-bridge switching stages is a second slave half-bridge switching stage, and wherein a second L-C resonant pair of said the at least one L-C resonant pair is connected between the intermediate current terminal of the master half-bridge switching stage and the intermediate current terminal of the second slave half-bridge switching stage and wherein a second L-C resonant pair of said the at least one L-C resonant pair is configured to be magnetically coupled with a second respective load, thereby defining a second equivalent resonant load (R-L-C-2);
wherein said control unit is configured to regulate a requested output power to be delivered the first resonant load to the first nominal reference value, and is configured to regulate a requested output power to be delivered the second resonant load to a second nominal reference value, wherein regulating the requested output powers further comprises the steps of
- adjusting the common switching frequency of all said PWM control signals and the phase displacement of at least one of said PWM control signals, wherein said step of adjusting the phase displacement is carried out by adjusting a time delay between turning-on instants of high-side/low-side switches of said master half-bridge switching stage and low-side/high-side switches of at least one of said slave half-bridge stages configured to supply said resonant loads, within the switching period;
said step of adjusting the phase displacement is carried out until hard-switching working conditions for at least one of said half-bridge switching stages are met, and wherein, when said hard switching working conditions are met the method further comprises the step of adjusting the common switching frequency of said PWM control signals to prevent said hard-switching working conditions.

7. The method according to claim 6, comprising the step of operating said master half-bridge switching stage to simultaneously energize said first resonant load (R-L-C-1) and said second resonant load (R-L-C-2).

8. The method according to claim 6 or 7, wherein when the first or the second nominal reference value is set equals to the second or to the first nominal reference value, and said first or second nominal reference value is lower than a first predetermined power level, said master half-bridge switching stage is not operated, and said first resonant load (R-L-C-1) and said second resonant load (R-L-C-2) are energized simultaneously by operating said first slave half-bridge switching stage and said second slave half-bridge switching stage, such that the first slave half-bridge switching stage is operated as the master half-bridge switching stage and said second slave half-bridge switching stage is operated as the first slave half-bridge switching stage.

9. The method of claim 6 or 7, wherein when the first nominal reference value and the second nominal value are set equal to each other and are lower than a second predetermined power level, the resonant loads (R-L-C-1, R-L-C-2) are energized only by operating said master half-bridge switching stage, and wherein the high-side controlled switches of said first and second slave half-bridge switching stages are maintained off during said switching periods, and wherein the low-side controlled switches of said first and second slave half-bridge switching stages are maintained on during said switching periods.

10. The method of claims 8 or 9, wherein said first predetermined power level and said second predetermined power level are lower than 900W, preferably lower than 600W, more preferably lower than 400W, said first predetermined power level being preferably equal to said second predetermined power level.

11. An induction hob comprising a switching converter, the switching converter having:
- a rectifier stage having input AC terminals, for receiving an AC voltage to be rectified, and a DC-bus having a high-side line and a low side line for making available a DC voltage on said DC-bus between said high-side line and said low-side line,
- a plurality of half-bridge switching stages, connected electrically in parallel between said high-side line and said low-side line, each half-bridge switching stage of said plurality of half-bridge switching stages comprising a respective high-side controlled switch and low-side controlled switch connected between them and sharing an intermediate current terminal of the half-bridge switching stage,
- at least a first L-C resonant pair connected between two intermediate current terminals of two half-bridge switching stages of said plurality of half-bridge switching stages, wherein said first L-C resonant pair being configured to be magnetically coupled with a respective load, thereby defining at least a first resonant load (R-L-C),
wherein said plurality of half-bridge switching stages comprises at least a master half-bridge switching stage and a slave half-bridge switching stage,
- a control unit configured to turn on and off the controlled switches of said half-bridge switching stages during switching periods by means of respective periodic PWM control signals, wherein said control unit is specifically configured to carry out a method according to any of claims from 1 to 10.

12. The induction hob of claim 11 comprising a plurality of modules, each module of said modules having a master half-bridge switching stage and at least one slave half-bridge switching stage, wherein said control unit is configured to control the half-bridge switching stages of each module according to the method of any of the claims from 1 to 10.

13. The induction hob of claim 11 or 12 wherein the converter is specifically configured to carry out a method of claims 8, 9, 10, in which the master half bridge switching stage and the at least one slave half bridge switching stages are provided with solid state switches as high-side controlled switches and low-side controlled switches, said solid state switches being preferably IGBT's, and wherein a power rating of the solid state switches belonging to said master half bridge switching stage is higher than a power rating of the solid state switches belonging to said at least one slave half bridge switching stage.

## Patentansprüche

1. Verfahren zum Steuern bzw. Regeln eines Induktionskochfelds, das mit einem Schaltwandler versehen ist, wobei der Schaltwandler umfasst:
- eine Gleichrichterstufe mit Eingangs-AC-Anschlüssen zum Empfangen einer gleichzurichtenden AC-Spannung und einem DC-Bus mit einer High-Side-Leitung und einer Low-Side-Leitung zum Bereitstellen einer DC-Spannung auf dem DC-Bus zwischen der High-Side-Leitung und der Low-Side-Leitung,
- eine Mehrzahl von Halbbrücken-Schaltstufen, die elektrisch parallel zwischen die High-Side-Leitung und die Low-Side-Leitung geschaltet sind, wobei jede Halbbrücken-Schaltstufe der Mehrzahl von Halbbrücken-Schaltstufen einen jeweiligen High-Side-gesteuerten bzw. -geregelten Schalter und einen Low-Side-gesteuerten bzw. -geregelten Schalter umfasst, die zwischen sie geschaltet sind und sich einen Zwischenstromanschluss der Halbbrücken-Schaltstufe teilen,
- zumindest ein erstes L-C-Resonanzpaar, das zwischen zwei Zwischenstromanschlüssen zweier Halbbrücken-Schaltstufen der Mehrzahl von Halbbrücken-Schaltstufen geschaltet ist, wobei das erste L-C-Resonanzpaar konfiguriert ist, magnetisch mit einer jeweiligen Last gekoppelt zu sein, wodurch zumindest eine erste äquivalente Resonanzlast (R-L-C) definiert ist,
wobei
- eine der Mehrzahl von Halbbrücken-Schaltstufen als eine Master-Halbbrücken-Schaltstufe betrieben wird, und
- eine zweite Halbbrücken-Schaltstufe der Mehrzahl von Halbbrücken-Schaltstufen als eine erste Slave-Halbbrücken-Schaltstufe betrieben wird,
und wobei ein erstes L-C-Resonanzpaar des zumindest einen L-C-Resonanzpaars zwischen den Zwischenstromanschluss der Master-Halbbrücken-Schaltstufe und den Zwischenstromanschluss der ersten Slave-Halbbrücken-Schaltstufe schaltbar ist,
und wobei das erste L-C-Resonanzpaar des zumindest einen L-C-Resonanzpaars magnetisch mit einer ersten jeweiligen Last gekoppelt ist, wodurch eine erste Resonanzlast (RLC1) der zumindest einen Resonanzlast (RLC) definiert ist,
- eine Steuer- bzw. Regeleinheit, die konfiguriert ist, die gesteuerten bzw. geregelten Schalter der Halbbrücken-Schaltstufen während Schaltperioden mittels jeweiliger periodischer PWM-Steuer- bzw. -Regelsignale ein- und auszuschalten;
wobei das Verfahren die folgenden Schritte umfasst:
mit der Steuer- bzw. Regeleinheit, Regulieren einer angeforderten Ausgangsleistung, die mit einem ersten nominalen Referenzwert an die zumindest eine erste Resonanzlast zu liefern ist, wobei das Regulieren der angeforderten Ausgangsleistung den Schritt umfasst:
- Einstellen einer gemeinsamen Schaltfrequenz aller PWM-Steuer- bzw. Regelsignale und einer Phasenverschiebung zumindest eines dieser PWM-Steuer- bzw. Regelsignale, wobei der Schritt des Einstellens der Phasenverschiebung durch Einstellen einer Zeitverzögerung zwischen Einschaltzeitpunkten der High-Side-/Low-Side-Schalter der Master-Halbbrücken-Schaltstufe und der Low-Side-/High-Side-Schalter der Slave-Halbbrücken-Schaltstufe ausgeführt wird, die konfiguriert sind, die erste Resonanzlast zuzuführen, und zwar innerhalb der Schaltperioden;
wobei der Schritt des Einstellens der Phasenverschiebung vorzugsweise in dem Bereich zwischen 0° und 180° ausgeführt wird, bis Hartschalten-Arbeitsbedingungen für die Halbbrücken-Schaltstufen erfüllt sind, und wobei, wenn die Hartschalten-Arbeitsbedingungen erfüllt sind, das Verfahren ferner den Schritt des Einstellens der gemeinsamen Schaltfrequenz aller PWM-Steuer- bzw. Regelsignale umfasst, um dadurch die Hartschalten-Arbeitsbedingungen zu vermeiden.

2. Verfahren nach dem vorhergehenden Anspruch, wobei der Schritt des Einstellens der Phasenverschiebung einen vorläufigen Schritt des Mappens bzw. Abbildens von Pegeln der Ausgangsleistung als eine Funktion der Phasenverschiebung und der gemeinsamen Schaltfrequenz um den ersten nominalen Referenzleistungswert beinhaltet, wodurch ein Betriebsphasenbereich definiert ist, und wobei der Einstellschritt ein Ändern der Phasenverschiebung innerhalb dieses Betriebsphasenbereichs mit einem Variationsschritt in dem Bereich zwischen 0,1° und 5°, vorzugsweise um etwa 2° beinhaltet.

3. Verfahren nach Anspruch 2, wobei der Betriebsphasenbereich basierend auf der Resonanzlast bestimmt und in einer Speichereinheit, vorzugsweise als eine Nachschlagetabelle, gespeichert wird, und wobei der Betriebsphasenbereich unter Verwendung, als Einträge für die Nachschlagetabelle, der angeforderten Ausgangsleistung, die an die äquivalente Resonanzlast (R-L-C) zu liefern ist, und der elektrischen Parameter der äquivalenten Resonanzlast (R-L-C) bestimmt wird.

4. Verfahren nach einem der vorhergehenden Ansprüche, wobei das Einstellen der gemeinsamen Schaltfrequenz aller PWM-Steuer- bzw. Regelsignale in einer Modifizierung der gemeinsamen Schaltfrequenz aller PWM-Steuer- bzw. Regelsignale von etwa 200 bis 300 Hz resultiert.

5. Verfahren nach einem der vorhergehenden Ansprüche, wobei, wenn der erste nominale Referenzwert niedriger als ein erster vorbestimmter Leistungspegel ist, das Verfahren ein Bestromen bzw. Mit-Energie-Versorgen der ersten Resonanzlast (RLC1) nur durch Betreiben der Master-Halbbrücken-Schaltstufe umfasst, und wobei der High-Side-gesteuerte Schalter der ersten Slave-Halbbrücken-Schaltstufe während der Schaltperioden ausgeschaltet bleibt, und wobei der Low-Side-gesteuerte Schalter der ersten Slave-Halbbrücken-Schaltstufe während der Schaltperioden eingeschaltet bleibt.

6. Verfahren nach einem der vorhergehenden Ansprüche, wobei eine dritte Halbbrücken-Schaltstufe der Mehrzahl von Halbbrücken-Schaltstufen eine zweite Slave-Halbbrücken-Schaltstufe ist, und wobei ein zweites L-C-Resonanzpaar des zumindest einen L-C-Resonanzpaars zwischen den Zwischenstromanschluss der Master-Halbbrücken-Schaltstufe und den Zwischenstromanschluss der zweiten Slave-Halbbrücken-Schaltstufe geschaltet ist, und wobei ein zweites L-C-Resonanzpaar des zumindest einen L-C-Resonanzpaars konfiguriert ist, magnetisch mit einer zweiten jeweiligen Last gekoppelt zu sein, wodurch eine zweite äquivalente Resonanzlast (R-L-C-2) definiert ist;
wobei die Steuer- bzw. Regeleinheit konfiguriert ist, eine angeforderte Ausgangsleistung, die an die erste Resonanzlast zu liefern ist, auf den ersten nominalen Referenzwert zu regulieren, und konfiguriert ist, eine angeforderte Ausgangsleistung, die an die zweite Resonanzlast zu liefern ist, auf einen zweiten nominalen Referenzwert zu regulieren,
wobei das Regulieren der angeforderten Ausgangsleistungen ferner die Schritte umfasst:
- Einstellen der gemeinsamen Schaltfrequenz aller PWM-Steuer- bzw. Regelsignale und der Phasenverschiebung zumindest eines dieser PWM-Steuer- bzw. Regelsignale, wobei der Schritt des Einstellens der Phasenverschiebung durch Einstellen einer Zeitverzögerung zwischen Einschaltzeitpunkten der High-Side-/Low-Side-Schalter der Master-Halbbrücken-Schaltstufe und der Low-Side-/High-Side-Schalter zumindest einer der Slave-Halbbrückenstufen ausgeführt wird, die konfiguriert sind, die erste Resonanzlast zuzuführen, und zwar innerhalb der Schaltperioden;
wobei der Schritt des Einstellens der Phasenverschiebung ausgeführt wird, bis Hartschalten-Arbeitsbedingungen für zumindest eine der Halbbrücken-Schaltstufen erfüllt sind, und wobei, wenn die Hartschalten-Arbeitsbedingungen erfüllt sind, das Verfahren ferner den Schritt des Einstellens der gemeinsamen Schaltfrequenz der PWM-Steuer- bzw. Regelsignale umfasst, um die Hartschalten-Arbeitsbedingungen zu vermeiden.

7. Verfahren nach Anspruch 6, umfassend den Schritt des Betreibens der Master-Halbbrücken-Schaltstufe, um die erste Resonanzlast (R-L-C-1) und die zweite Resonanzlast (R-L-C-2) gleichzeitig zu bestromen bzw. mit Energie zu versorgen.

8. Verfahren nach Anspruch 6 oder 7, wobei, wenn der erste oder der zweite nominale Referenzwert gleich dem zweiten oder dem ersten nominalen Referenzwert festgelegt ist und der erste oder zweite nominale Referenzwert niedriger als ein erster vorbestimmter Leistungspegel ist, die Master-Halbbrücken-Schaltstufe nicht betrieben wird und die erste Resonanzlast (R-L-C-1) und die zweite Resonanzlast (R-L-C-2) gleichzeitig durch Betreiben der ersten Slave-Halbbrücken-Schaltstufe und der zweiten Slave-Halbbrücken-Schaltstufe bestromt bzw. mit Energie versorgt werden, sodass die erste Slave-Halbbrücken-Schaltstufe als die Master-Halbbrücken-Schaltstufe betrieben wird und die zweite Slave-Halbbrücken-Schaltstufe als die erste Slave-Halbbrücken-Schaltstufe betrieben wird.

9. Verfahren nach Anspruch 6 oder 7, wobei, wenn der erste nominale Referenzwert und der zweite nominale Wert zueinander gleich festgelegt sind und niedriger als ein zweiter vorbestimmter Leistungspegel sind, die Resonanzlasten (R-L-C-1, R-L-C-2) nur durch Betreiben der Master-Halbbrücken-Schaltstufe bestromt bzw. mit Energie versorgt werden, und wobei die High-Side-gesteuerten Schalter der ersten und zweiten Slave-Halbbrücken-Schaltstufe während der Schaltperioden ausgeschaltet bleiben, und wobei die Low-Side-gesteuerten Schalter der ersten und zweiten Slave-Halbbrücken-Schaltstufe während der Schaltperioden eingeschaltet bleiben.

10. Verfahren nach Anspruch 8 oder 9, wobei der erste vorbestimmte Leistungspegel und der zweite vorbestimmte Leistungspegel niedriger als 900 W, vorzugsweise niedriger als 600 W, besonders bevorzugt niedriger als 400 W sind, wobei der erste vorbestimmte Leistungspegel vorzugsweise gleich dem zweiten vorbestimmten Leistungspegel ist.

11. Induktionskochfeld, umfassend einen Schaltwandler, wobei der Schaltwandler umfasst:
- eine Gleichrichterstufe mit Eingangs-AC-Anschlüssen zum Empfangen einer gleichzurichtenden AC-Spannung und einem DC-Bus mit einer High-Side-Leitung und einer Low-Side-Leitung zum Bereitstellen einer DC-Spannung auf dem DC-Bus zwischen der High-Side-Leitung und der Low-Side-Leitung,
- eine Mehrzahl von Halbbrücken-Schaltstufen, die elektrisch parallel zwischen die High-Side-Leitung und die Low-Side-Leitung geschaltet sind, wobei jede Halbbrücken-Schaltstufe der Mehrzahl von Halbbrücken-Schaltstufen einen jeweiligen High-Side-gesteuerten bzw. -geregelten Schalter und einen Low-Side-gesteuerten bzw. -geregelten Schalter umfasst, die zwischen sie geschaltet sind und sich einen Zwischenstromanschluss der Halbbrücken-Schaltstufe teilen,
- zumindest ein erstes L-C-Resonanzpaar, das zwischen zwei Zwischenstromanschlüssen zweier Halbbrücken-Schaltstufen der Mehrzahl von Halbbrücken-Schaltstufen geschaltet ist, wobei das erste L-C-Resonanzpaar konfiguriert ist, magnetisch mit einer jeweiligen Last gekoppelt zu sein, wodurch zumindest eine erste Resonanzlast (R-L-C) definiert ist,
wobei die Mehrzahl von Halbbrücken-Schaltstufen zumindest eine Master-Halbbrücken-Schaltstufe und eine Slave-Halbbrücken-Schaltstufe umfasst,
- eine Steuer- bzw. Regeleinheit, die konfiguriert ist, die gesteuerten bzw. geregelten Schalter der Halbbrücken-Schaltstufen während Schaltperioden mittels jeweiliger periodischer PWM-Steuer- bzw. -Regelsignale ein- und auszuschalten;
wobei die Steuer- bzw. Regeleinheit speziell für zum Ausführen eines Verfahrens nach einem der Ansprüche 1 bis 10 konfiguriert ist.

12. Induktionskochfeld nach Anspruch 11, umfassend eine Mehrzahl von Modulen, wobei jedes Modul der Module eine Master-Halbbrücken-Schaltstufe und zumindest eine Slave-Halbbrücken-Schaltstufe aufweist, wobei die Steuer- bzw. Regeleinheit konfiguriert ist, die Halbbrücken-Schaltstufen jedes Moduls gemäß dem Verfahren nach einem der Ansprüche 1 bis 10 zu steuern bzw. zu regeln.

13. Induktionskochfeld nach Anspruch 11 oder 12, wobei der Wandler speziell konfiguriert ist, ein Verfahren nach den Ansprüchen 8, 9, 10 auszuführen, wobei die Master-Halbbrücken-Schaltstufe und die zumindest eine Slave-Halbbrücken-Schaltstufe mit Festkörper- bzw. Halbleiterschaltern als High-Side- und Low-Side-gesteuerten Schaltern versehen sind, wobei die Halbleiterschalter vorzugsweise IGBTs sind, und wobei eine Nennleistung der Halbleiterschalter, die zu der Master-Halbbrücken-Schaltstufe gehören, höher ist als eine Nennleistung der Halbleiterschalter, die zu der zumindest einen Slave-Halbbrücken-Schaltstufe gehören.

## Revendications

1. Procédé de commande d'une plaque de cuisson par induction pourvue d'un convertisseur à découpage, ledit convertisseur à découpage comprenant :
- un étage de redressement ayant des bornes AC d'entrée, pour recevoir une tension AC à rectifier, et un bus-DC ayant une ligne côté haut et une ligne côté bas pour rendre disponible une tension DC sur ledit bus-DC entre ladite ligne côté haut et ladite ligne côté bas,
- une pluralité d'étages de commutation en demi-pont, électriquement connectés en parallèle entre ladite ligne côté haut et ladite ligne côté bas, chaque étage de commutation en demi-pont de ladite pluralité d'étages de commutation en demi-pont comprenant un commutateur commandé côté haut et un commutateur commandé côté bas respectifs connectés entre eux et partageant une borne de courant intermédiaire de l'étage de commutation en demi-pont,
- au moins une première paire de résonance L-C connectée entre deux bornes de courant intermédiaires de deux étages de commutation en demi-pont de ladite pluralité d'étages de commutation en demi-pont, dans lequel ladite première paire de résonance L-C étant configurée pour être magnétiquement couplée à une charge respective, définissant ainsi au moins une première charge de résonance équivalente (R-L-C),
dans lequel
- l'un de ladite pluralité d'étages de commutation en demi-pont, fonctionne comme étage maître de commutation en demi-pont, et
- un second étage de commutation en demi-pont de ladite pluralité d'étages de commutation en demi-pont fonctionne comme un premier étage esclave de commutation en demi-pont
et dans lequel une première paire de résonance L-C de ladite au moins une paire de résonance L-C peut être connectée entre la borne de courant intermédiaire de l'étage maître de commutation en demi-pont et la borne de courant intermédiaire du premier étage esclave de commutation en demi-pont,
et dans lequel la première paire de résonance L-C de ladite au moins une paire de résonance L-C étant magnétiquement couplée à une première charge respective, définissant ainsi une première charge de résonance (RLC1) de la au moins une charge de résonance (RLC),
- une unité de commande configurée pour mettre en marche et en arrêt les commutateurs commandés desdits étages de commutation en demi-pont durant des périodes de commutation à l'aide de signaux de commande PWM périodiques respectifs ;
ledit procédé comprenant les étapes suivantes consistant à :
avec ladite unité de commande, réguler une puissance de sortie requise à délivrer à ladite au moins une première charge de résonance avec une première valeur de référence nominale, dans lequel la régulation de la puissance de sortie requise comprend l'étape consistant à
- ajuster une fréquence de commutation commune de l'ensemble desdits signaux de commande PWM et un déplacement de phase d'au moins l'un desdits signaux de commande PWM, dans lequel ladite étape d'ajustement du déplacement de phase est exécutée en ajustant un délai de temps entre des instants de mise en marche des commutateurs côté haut/côté bas dudit étage maître de commutation en demi-pont et des commutateurs côté bas/côté haut dudit étage esclave de commutation en demi-pont configuré pour alimenter ladite première charge de résonance, à l'intérieur des périodes de commutation ;
ladite étape d'ajustement du déplacement de phase est exécutée, préférablement dans la plage comprise entre 0° et 180°, jusqu'à ce que des conditions de travail en commutation dure pour lesdits étages de commutation en demi-pont soient rencontrées, et dans lequel, lorsque lesdites conditions de travail en commutation dure sont rencontrées, le procédé comprenant en outre l'étape d'ajustement de la fréquence de commutation commune de l'ensemble desdits signaux de commande PWM, pour empêcher ainsi lesdites conditions de travail en commutation dure.

2. Procédé selon la revendication précédente, dans lequel l'étape d'ajustement du déplacement de phase inclut une étape préliminaire de mappage des niveaux de puissance de sortie comme une fonction de déplacement de phase et de la fréquence de commutation commune concernant la première valeur de puissance de référence nominale, définissant ainsi une plage de phases de fonctionnement, et dans lequel ladite étape d'ajustement inclut le changement du déplacement de phase à l'intérieur de ladite plage de phases de fonctionnement avec une étape de variation située dans la plage comprise entre 0,1° et 5°, préférablement d'environ 2°.

3. Procédé selon la revendication 2, dans lequel ladite plage de phases de fonctionnement est déterminée sur la base de la charge de résonance et est stockée dans une unité mémoire, préférablement sous la forme d'un tableau de consultation, et dans lequel ladite plage de phases de fonctionnement est déterminée en utilisant comme entrées pour le tableau de consultation, la puissance de sortie requise à délivrer à la charge de résonance équivalente (R-L-C) et les paramètres électriques de la charge de résonance équivalente (R-L-C).

4. Procédé selon l'une des revendications précédentes, dans lequel l'ajustement de la fréquence de commutation commune de l'ensemble desdits signaux de commande PWM résulte en modification de la fréquence de commutation commune de l'ensemble desdits signaux de commande PWM d'environ 200 à 300 Hz.

5. Procédé selon l'une quelconque des revendications précédentes, dans lequel lorsque la première valeur de référence nominale est inférieure à un premier niveau de puissance prédéterminé, le procédé comprend l'excitation de la première charge de résonance (RLC1) uniquement par activation dudit étage maître de commutation en demi-pont, et dans lequel le commutateur commandé côté haut dudit premier étage esclave de commutation en demi-pont est maintenu à l'arrêt durant lesdites périodes de commutation, et dans lequel le commutateur commandé côté bas dudit premier étage esclave de commutation en demi-pont est maintenu en marche durant lesdites périodes de commutation.

6. Procédé selon l'une quelconque des revendications précédentes, dans lequel un troisième étage de commutation en demi-pont de ladite pluralité d'étages de commutation en demi-pont est un second étage esclave de commutation en demi-pont, et dans lequel une seconde paire de résonance L-C de ladite au moins une paire de résonance L-C est connectée entre la borne de courant intermédiaire de l'étage maître de commutation en demi-pont et la borne de courant intermédiaire du second étage esclave de commutation en demi-pont et dans lequel une seconde paire de résonance L-C de ladite au moins une paire de résonance L-C est configurée pour être magnétiquement couplée à une seconde charge respective, définissant ainsi une seconde charge de résonance équivalente (R-L-C-2) ;
dans lequel ladite unité de commande est configurée pour réguler une puissance de sortie requise à délivrer à la première charge de résonance à la première valeur de référence nominale, et est configurée pour réguler une puissance de sortie requise à délivrer à la seconde charge de résonance à une seconde valeur de référence nominale,
dans lequel la régulation des puissances de sortie requises comprend en outre les étapes consistant à
- ajuster la fréquence de commutation commune de l'ensemble desdits signaux de commande PWM et le déplacement de phase de au moins l'un desdits signaux de commande PWM, dans lequel ladite étape d'ajustement du déplacement de phase est exécutée en ajustant un délai de temps entre les instants de marche des commutateurs côté haut/côté bas dudit étage maître de commutation en demi-pont et des commutateurs côté bas/côté haut d'au moins l'un desdits étages esclaves en demi-pont configurés pour alimenter lesdites charges de résonance, à l'intérieur de la période de commutation ;
ladite étape d'ajustement du déplacement de phase est exécutée jusqu'à ce que des conditions de travail en commutation dure pour au moins l'un desdits étages de commutation en demi-pont sont rencontrées, et dans lequel, lorsque lesdites conditions de travail en commutation dure sont rencontrées, le procédé comprend en outre l'étape d'ajustement de la fréquence de commutation commune desdits signaux de commande PWM pour empêcher lesdites conditions de travail en commutation dure.

7. Procédé selon la revendication 6,
comprenant l'étape de fonctionnement dudit étage maître de commutation en demi-pont pour exciter simultanément ladite première charge de résonance (R-L-C-1) et ladite seconde charge de résonance (R-L-C-2).

8. Procédé selon la revendication 6 ou 7, dans lequel lorsque la première ou la seconde valeur de référence nominale est définie égale à la seconde ou à la première valeur de référence nominale, et que lesdites première ou seconde valeur de référence nominale est inférieure à un premier niveau de puissance prédéterminé, ledit étage maître de commutation en demi-pont n'est pas activé, et ladite première charge de résonance (R-L-C-1) et ladite seconde charge de résonance (R-L-C-2) sont excitées simultanément par activation dudit premier étage esclave de commutation en demi-pont et dudit second étage esclave de commutation en demi-pont, de sorte que le premier étage esclave de commutation en demi-pont est activé comme étage maître de commutation en demi-pont et que ledit second étage esclave de commutation en demi-pont est activé comme premier étage esclave de commutation en demi-pont.

9. Procédé selon la revendication 6 ou 7, dans lequel lorsque la première valeur de référence nominale et la seconde valeur nominale sont définies égales l'une à l'autre et sont inférieures à un second niveau de puissance prédéterminé, les charges de résonance (R-L-C-1, R-L-C-2) sont excitées uniquement par activation dudit étage maître de commutation en demi-pont, et dans lequel les commutateurs commandés côté haut desdits premier et second étage esclave de commutation en demi-pont sont maintenus à l'arrêt durant lesdites périodes de commutation, et dans lequel le commutateur commandé côté bas desdits premier et second étage esclave de commutation en demi-pont sont maintenus en marche durant lesdites périodes de commutation.

10. Procédé selon les revendications 8 ou 9, dans lequel ledit premier niveau de puissance prédéterminé et ledit second niveau de puissance prédéterminé sont inférieurs à 900 W, préférablement inférieurs à 600 W, plus préférablement inférieurs à 400 W, ledit premier niveau de puissance prédéterminé étant préférablement égal audit second niveau de puissance prédéterminé.

11. Plaque de cuisson par induction comprenant un convertisseur à découpage, le convertisseur à découpage ayant :
- un étage de redressement ayant des bornes AC d'entrée, pour recevoir une tension AC à redresser, et un bus-DC ayant une ligne côté haut et une ligne côté bas pour rendre disponible une tension DC sur ledit bus-DC entre ladite ligne côté haut et ladite ligne côté bas,
- une pluralité d'étages de commutation en demi-pont, électriquement connectés en parallèle entre ladite ligne côté haut et ladite ligne côté bas, chaque étage de commutation en demi-pont de ladite pluralité d'étages de commutation en demi-pont comprenant un commutateur commandé côté haut et un commutateur commandé côté bas respectifs connectés entre eux et partageant une borne de courant intermédiaire de l'étage de commutation en demi-pont,
- au moins une première paire de résonance L-C connectée entre deux bornes de courant intermédiaires de deux étages de commutation en demi-pont de ladite pluralité d'étages de commutation en demi-pont, dans lequel ladite première paire de résonance L-C étant configurée pour être magnétiquement couplée à une charge respective, définissant ainsi au moins une première charge de résonance (R-L-C),
dans lequel ladite pluralité d'étages de commutation en demi-pont comprend au moins un étage maître de commutation en demi-pont et un étage esclave de commutation en demi-pont,
- une unité de commande configurée pour mettre en marche et en arrêt les commutateurs commandés desdits étages de commutation en demi-pont durant des périodes de commutation à l'aide de signaux de commande PWM périodiques respectifs, dans lequel ladite unité de commande est spécifiquement configurée pour exécuter un procédé selon l'une quelconque des revendications de 1 à 10.

12. Plaque de cuisson par induction selon la revendication 11, comprenant une pluralité de modules, chaque module desdits modules ayant un étage maître de commutation en demi-pont et au moins un étage esclave de commutation en demi-pont, dans lequel ladite unité de commande est configurée pour commander les étages de commutation en demi-pont de chaque module selon le procédé selon l'une quelconque des revendications de 1 à 10.

13. Plaque de cuisson par induction selon la revendication 11 ou 12, dans laquelle le convertisseur est spécifiquement configuré pour exécuter un procédé selon les revendications 8, 9, 10, dans laquelle l'étage maître de commutation en demi-pont et le au moins un étage esclave de commutation en demi-pont sont pourvus de commutateurs à l'état solide comme commutateurs commandés côté haut et commutateurs commandés côté bas, lesdits commutateurs à l'état solide étant préférablement des IGBT, et dans laquelle une puissance nominale des commutateurs à l'état solide appartenant audit étage maître de commutation en demi-pont est supérieure à une puissance nominale des commutateurs à l'état solide appartenant audit au moins un étage esclave de commutation en demi-pont.
